(19) Europäisches Patentamt
European Patent Office
Office européen des brevets

(11) **EP 3 301 329 B1**

(12) **FASCICULE DE BREVET EUROPEEN**

(45) Date de publication et mention
de la délivrance du brevet:
**19.06.2019  Bulletin 2019/25**

(51) Int Cl.:
**F16H 48/00** *(2012.01)*

(21) Numéro de dépôt: **17194159.4**

(22) Date de dépôt: **29.09.2017**

(54) **RÉDUCTEUR ÉPICYCLOÏDAL, BOGIE COMPRENANT UN TEL RÉDUCTEUR ET VÉHICULE FERROVIAIRE ASSOCIÉ**

PLANETENGETRIEBE, DREHGESTELL, DAS EIN SOLCHES PLANETENGETRIEBE UMFASST, UND ENTSPRECHENDES SCHIENENFAHRZEUG

EPICYCLICAL GEAR REDUCER, BOGIE COMPRISING SUCH A GEAR REDUCER AND ASSOCIATED RAILWAY VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **30.09.2016   FR 1659408**

(43) Date de publication de la demande:
**04.04.2018   Bulletin 2018/14**

(73) Titulaire: **ALSTOM Transport Technologies
93400 Saint-Ouen (FR)**

(72) Inventeur: **FRACES, Mathieu
71100 Chalon sur Saone (FR)**

(74) Mandataire: **Lavoix
2, place d'Estienne d'Orves
75441 Paris Cedex 09 (FR)**

(56) Documents cités:
**EP-A1- 0 177 179     DE-A1-102011 118 481
FR-A- 1 206 273     GB-A- 1 360 737**

EP 3 301 329 B1

## Description

La présente invention concerne un réducteur épicycloïdal, un bogie comprenant un tel réducteur et un véhicule ferroviaire comprenant un tel bogie.

Il est fréquent que des systèmes mécaniques comportent des réducteurs, permettant de transmettre un mouvement de rotation entre deux axes en modifiant la vitesse de rotation d'un axe par rapport à l'autre.

De nombreux types de réducteurs existent, parmi lesquels les réducteurs épicycloïdaux sont fréquemment utilisés. Les réducteurs épicycloïdaux comprennent un ou plusieurs pignons, dits satellites, engrenant sur deux pignons, dits planétaires, dont ils transmettent les mouvements de l'un à l'autre. Les pignons satellites sont portés par une pièce appelée porte-satellite, et une relation mathématique fixe les vitesses de rotation respectives du porte-satellite et des deux pignons planétaires, ainsi que celles des axes que les pignons planétaires entraînent en rotation, les unes par rapport aux autres.

Dans le domaine des transports, des réducteurs épicycloïdaux dits « sphériques » sont en particulier utilisés. Les réducteurs épicycloïdaux de ce type se caractérisent par l'utilisation de pignons satellites dont l'axe de rotation est perpendiculaire à l'axe de rotation des deux pignons planétaires. Par exemple, il est fréquent que les pignons satellites soient disposés en cercle autour de l'axe des deux planétaires, les axes des satellites étant tous concourants en un point de l'axe des deux planétaires.

Le document DE 10 2011 118 481 A1 décrit un réducteur épicycloïdal.

Chaque pignon planétaire et chaque pignon satellite comporte des dents, le nombre de dents de chaque pignon étant choisi en fonction des efforts mécaniques à transmettre. Cependant, la répartition des efforts mécaniques à transmettre entre les différents pignons est susceptible de varier en fonction du temps du fait des imperfections existant inévitablement dans la géométrie des dents, les dents de certains satellites n'étant temporairement pas en contact avec les dents des pignons planétaires. En particulier, les efforts mécaniques ne sont pas toujours répartis de façon égale entre les différents satellites, ces efforts pouvant même dans certains cas être répartis seulement sur la moitié des satellites. Cette situation est en particulier fréquente lorsque le nombre de dents des planétaires n'est pas un multiple entier du nombre de satellites.

En conséquence, les efforts mécaniques imposés aux dents effectivement en contact avec les planétaires sont supérieurs aux efforts attendus dans le cas où les efforts seraient équitablement répartis entre les différents satellites. Les risques de rupture des dents sont donc augmentés.

Un des buts de l'invention est de proposer un réducteur épicycloïdal qui soit plus fiable.

A cet effet, l'invention a pour objet un réducteur épicycloïdal comprenant un premier pignon planétaire mobile en rotation autour d'un premier axe et un premier nombre de pignons satellites engrenant sur le premier pignon planétaire, le premier pignon planétaire comprenant un deuxième nombre de dents réparties angulairement selon un premier pas angulaire autour du premier axe, le deuxième nombre n'étant pas un multiple entier du premier nombre, chaque pignon satellite étant mobile autour d'un deuxième axe respectif, les deuxièmes axes et le premier axe étant concourants en un même point, deux deuxièmes axes consécutifs définissant entre eux un premier angle.

Une différence angulaire entre au moins un premier angle et un deuxième angle, égal au résultat de la division de 360 par le premier nombre entier, est conforme à l'équation :

$$\left| D2 \right| = \frac{N4 * P1}{N1}$$

dans laquelle N4 est un quatrième nombre entier différent de zéro et | | désigne la valeur absolue.

Grâce à l'invention, le contact entre les dents des pignons planétaires et des pignons satellites est amélioré lors de la rotation des pignons, et ce même si le profil des dents n'est pas idéal. La répartition des efforts entre les pignons planétaires est donc rendue plus homogène, et le risque de rupture des dents est réduit.

Selon d'autres aspects avantageux de l'invention, le réducteur comprend une ou plusieurs des caractéristiques suivantes, prises isolément ou suivant toutes les combinaisons techniquement possibles :

- le réducteur comprend un croisillon comprenant un ensemble de paires de bras, chaque bras portant un pignon satellite respectif et s'étendant selon le deuxième axe du pignon satellite correspondant, les deux pignons satellites de chaque paire étant coaxiaux.
- le réducteur comporte quatre pignons satellites.
- le deuxième nombre est un nombre pair et au moins une deuxième différence angulaire entre l'un des premiers angles et un angle droit est égale, en valeur absolue, à la moitié du premier pas angulaire.
- le deuxième nombre est un nombre pair et une différence angulaire entre deux premiers angles consécutifs est égale, en valeur absolue, au premier pas angulaire.

- le réducteur comporte trois pignons satellites.
- au moins une troisième différence angulaire entre un premier angle (et un angle de cent vingt degrés est égale, en valeur absolue, à un tiers du premier pas angulaire.
- chaque différence angulaire est inférieure ou égale au premier pas angulaire.

L'invention a également pour objet un bogie moteur de véhicule ferroviaire comprenant un réducteur épicycloïdal tel que défini ci-dessus.

L'invention a également pour objet un véhicule ferroviaire comprenant un bogie moteur tel que défini ci-dessus.

D'autres aspects et avantages de l'invention apparaîtront à la lecture de la description qui va suivre, donnée uniquement à titre d'exemple non limitatif et faite en référence aux dessins annexés, sur lesquels :

- la figure 1 est une vue en perspective éclatée d'un réducteur épicycloïdal selon l'invention,
- la figure 2 est une représentation schématique, en coupe, du réducteur épicycloïdal de la figure 1, et
- la figure 3 est une représentation de la position angulaire des dents d'un pignon planétaire au cours de la rotation de celui-ci.

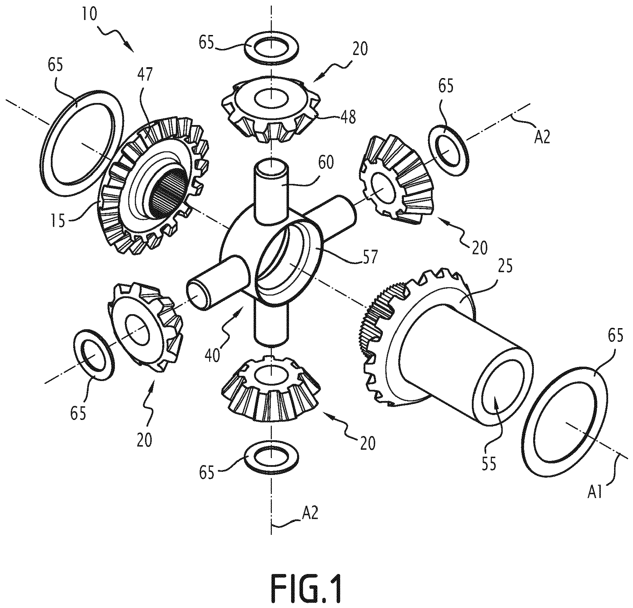

Un réducteur épicycloïdal 10 est représenté sur la figure 1. Le réducteur 10 est, par exemple, monté sur un bogie moteur d'un véhicule ferroviaire.

Le réducteur 10 comprend un premier pignon planétaire 15, un premier nombre N1 de pignons satellites 20, un deuxième pignon planétaire 25, un premier arbre 30, un deuxième arbre 35, un croisillon 40, et un porte-satellites 45. Afin de ne pas surcharger la figure 1, le premier arbre 30, le deuxième arbre 35 et le porte-satellites 45 n'y ont pas été représentés.

Selon l'exemple de la figure 1, le premier nombre N1 de pignons satellites 20 est égal à 4. En variante, le premier nombre N1 est un nombre entier différent de 4.

Le premier pignon planétaire 15 est mobile en rotation par rapport au porte-satellite 45 autour d'un premier axe A1. Le premier pignon planétaire 15 est solidaire en rotation du premier arbre 30.

Le premier pignon planétaire 15 comporte un deuxième nombre N2 de dents 47. Le deuxième nombre N2 n'est pas égal à un multiple entier du premier nombre N1.

Le deuxième nombre N2 est avantageusement un nombre pair. Par exemple, lorsque le premier nombre N1 est égal à 4, le deuxième nombre N2 est égal à 30. En variante, le deuxième nombre N2 est un nombre impair.

Les dents 47 du premier pignon planétaire 15 sont réparties angulairement selon un premier pas angulaire P1 autour du premier axe A1. Le premier pas angulaire P1 est défini comme étant une valeur d'un angle défini par deux droites concourantes entre elles et avec le premier axe A1 en un même point et traversant chacune le sommet d'une dent 47 du premier pignon planétaire 15, les dents 47 considérées étant consécutives. Le premier pas angulaire P1 est, par exemple, constant, c'est-à-dire que la valeur du premier pas angulaire P1 ne dépend pas du groupe de deux dents 47 du premier pignon planétaire 15 consécutives considérées. La valeur, en degrés (°), du premier pas angulaire P1 est alors égale au résultat de la division de 360 par le deuxième nombre N2.

Chaque pignon satellite 20 engrène sur le premier pignon planétaire 15 et sur le deuxième pignon planétaire 25. Chaque pignon satellite 20 est donc configuré pour transmettre un effort de rotation entre le premier pignon planétaire 15 et le deuxième pignon planétaire 25. Chaque pignon satellite 20 comporte un ensemble de dents 48.

Chaque pignon satellite 20 est mobile en rotation par rapport au porte-satellite 45 autour d'un deuxième axe A2 correspondant. Chaque deuxième axe A2 est perpendiculaire au premier axe A1. Par exemple, les deuxièmes axes A2 sont coplanaires les uns aux autres et définissent un plan perpendiculaire au premier axe A1.

Chaque deuxième axe A2 est concourant avec chaque autre deuxième axe A2. Chaque deuxième axe A2 est concourant avec le premier axe A1. Par exemple, les deuxièmes axes A2 et le premier axe A1 sont tous concourants en un même point.

Un premier angle α1 est défini pour chaque groupe de deux deuxièmes axes A2 consécutifs. Il est entendu par « consécutif » que les deux deuxièmes axes A2 d'un même groupe sont rencontrés successivement au cours d'un mouvement de rotation autour du premier axe A1, sans qu'un autre deuxième axe A2 ait été rencontré entre les deux deuxièmes axes A2 du groupe considéré. C'est-à-dire que deux deuxièmes axes consécutifs sont adjacents. Chaque deuxième axe A2 définit alors deux premiers angles α1 consécutifs avec les deux deuxièmes axes A2 qui lui sont adjacents.

Au moins un premier angle α1 n'est pas égal à une fraction entière de 360°. En d'autres termes, une valeur, en degrés, d'au moins un premier angle α1 n'est pas égale au résultat de la division de 360 par un nombre entier.

Une première différence angulaire D1 est définie pour chaque groupe de deux premiers angles α1 consécutifs. La première différence angulaire D1 est égale au résultat de la soustraction d'une valeur de l'un des premiers angles α1 du groupe à une valeur de l'autre premier angle α1 du groupe considéré.

Chaque première différence angulaire D1 est égale, en valeur absolue, au produit entre un troisième nombre entier N3 et le premier pas angulaire P1.

Au moins deux premiers angles α1 ne sont pas égaux entre eux. Ainsi, au moins un des troisièmes nombres entiers N3 est différent de zéro. La valeur d'au moins un des deux premiers angles α1 considérés n'est pas égale au résultat de la division de 360 par un nombre entier. Par exemple, au moins un premier angle α1 n'est égal ni à 180°, ni à 120°, ni à 90°, ni à 72°, ni à 60°, ni à 45°, ni à l'autre premier angle formé avec le même deuxième axe A2.

Au moins une première différence angulaire D1 est égale, en valeur absolue, au premier pas angulaire P1. De préférence, chaque première différence angulaire D1 est égale au premier pas angulaire P1, c'est-à-dire que chaque troisième nombre entier N3 est égal à un.

Un deuxième angle α2 ayant une valeur, en degrés, égale au produit de la division de 360 par le premier nombre N1 est défini. Le deuxième angle α2 correspond donc à l'angle entre deux deuxièmes axes A2 si les pignons satellites 20 étaient équirépartis angulairement autour du premier axe A1.

Au moins une deuxième différence angulaire D2 entre un premier angle α1 et le deuxième angle α2 est égale, en valeur absolue, au produit entre un quatrième nombre entier N4 différent de zéro, le premier pas angulaire P1 et l'inverse du premier nombre N1.

Ainsi, la deuxième différence angulaire D2 est conforme à l'équation 1 suivante :

$$|D2| = |\alpha1 - \alpha2| = \frac{N4 \cdot P1}{N1} \qquad \text{(équation 1)}$$

Par exemple, la valeur d'au moins un premier angle α1 est égale à la somme du résultat de la division de 360 par le premier nombre N1 moins le résultat de la division du premier pas angulaire P1 par le premier nombre N1.

En variante ou en complément, la valeur d'au moins un premier angle α1 est égale à la somme du résultat de la division de 360 par le premier nombre N1 plus le résultat de la division du premier pas angulaire P1 par le premier nombre N1.

Ainsi, la valeur du premier angle α1 est conforme à l'équation 2 suivante :

$$\alpha1 = \frac{360}{N1} + \frac{P1}{N1} \qquad \text{(Equation 2)}$$

Par exemple, dans le cas où le premier nombre N1 est égal à 4, les premiers angles α1 sont chacun égal à 90° moins la moitié du premier pas angulaire P1 ou égal à 90° plus la moitié du premier pas angulaire P1. En d'autres termes, chaque deuxième différence angulaire D2 est définie entre chaque premier angle α1 et un angle droit, chaque deuxième différence angulaire D2 étant égale, en valeur absolue, à la moitié du premier pas angulaire P1.

Selon l'exemple de la figure 1, pour chaque groupe de deux premiers angles α1 consécutifs, les deux premiers angles α1 considérés ne sont pas égaux l'un à l'autre. Chaque première différence angulaire D1 est alors égale au premier pas angulaire P1.

Ainsi, chaque premier angle α1 est égal au produit entre un quatrième nombre entier N4 et le premier pas angulaire P1.

Le deuxième pignon planétaire 25 est mobile en rotation par rapport au porte-satellite 45 autour du premier axe A1. Le deuxième pignon planétaire 25 comporte un cinquième nombre N5 de dents 47. Le cinquième nombre N5 est égal au deuxième nombre N2.

Le deuxième pignon planétaire 25 est solidaire en rotation du deuxième arbre 35.

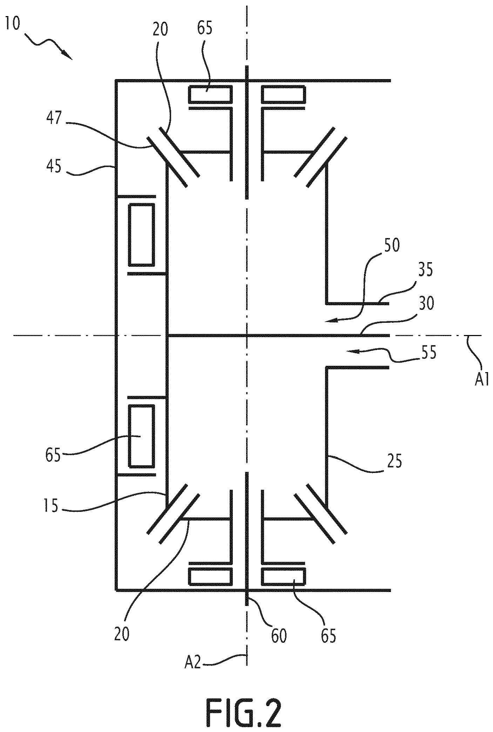

Selon l'exemple de la figure 2, le deuxième pignon planétaire 25 entoure le premier arbre 30 dans un plan perpendiculaire au premier axe A1. Le deuxième pignon planétaire 25 délimite alors une première ouverture 50 de passage du premier arbre 30. La première ouverture 50 est cylindrique à base circulaire autour du premier axe A1.

Le premier arbre 30 s'étend, à partir du premier pignon planétaire 15, selon le premier axe A1, à travers les croisillons 40 et le deuxième arbre 35

Le premier axe 30 est cylindrique à base circulaire autour du premier axe A1.

Le premier axe 30 est mobile en rotation, par rapport au porte-satellite 45, autour du premier axe A1.

Le deuxième arbre 35 est mobile en rotation autour du premier axe A1 par rapport au porte-satellite 45.

Le deuxième arbre 35 est cylindrique à base circulaire autour du premier axe A1. Le deuxième arbre 35 est creux et entoure le premier arbre 30 dans un plan perpendiculaire au premier axe A1. Le deuxième arbre 35 délimite une deuxième ouverture 55 de passage du premier arbre 30. La deuxième ouverture 55 est cylindrique à base circulaire autour du premier axe A1.

Le croisillon 40 porte chaque pignon satellite 20. Les croisillons 40 comportent un anneau central 57 et un ensemble de bras 60.

L'anneau central 57 sépare le premier pignon planétaire 15 du deuxième pignon planétaire 25 selon le premier axe A1.

L'anneau central 57 porte tous les bras 60. Chaque bras 60 s'étend, à partir de l'anneau central 57, perpendiculairement au premier axe A1.

Chaque bras 60 porte un pignon satellite 20 respectif. Chaque bras 60 s'étend selon le deuxième axe A2 du pignon satellite 20 correspondant à partir de l'anneau central 57. Par exemple, chaque bras 60 est cylindrique à base circulaire autour du deuxième axe A2 correspondant.

Chaque bras 60 est prévu pour guider en rotation autour du deuxième axe A2 correspondant le pignon satellite 20 qu'il porte.

Selon l'exemple de la figure 1, les bras 60 sont regroupés en un ensemble de paires. Lorsque le premier nombre N1 est égal à 4, les bras 60 sont regroupés en deux paires. Les deuxièmes axes A2 des deux pignons satellites 20 d'une même paire sont confondus l'un avec l'autre. En d'autres termes, les pignons satellites 20 portés par deux bras 60 d'une même paire sont coaxiaux.

Deux premiers angles α1 consécutifs sont alors supplémentaires l'un de l'autre, c'est-à-dire que la somme de deux premiers angles α1 consécutifs est égale à 180°.

Le porte-satellite 45 entoure le premier pignon planétaire 15, chaque pignon satellite 20, le deuxième pignon planétaire 25 et le croisillon 40. Le porte-satellite 45 est prévu pour maintenir en position les pignons 15, 20, 25, les uns par rapport aux autres, tout en permettant la rotation de chaque pignon 15, 20, 25 autour de l'axe A1, A2 correspondant. Par exemple, le porte-satellite 45 comporte, pour chaque bras 60, une ouverture accueillant l'extrémité du bras 60 opposée à l'anneau 57.

Chaque pignon 15, 20, 25 est accueilli dans un logement correspond du porte-satellite 47. Une bague 65 formant palier est interposée entre chaque pignon 15, 20, 25 et le porte-satellite 47.

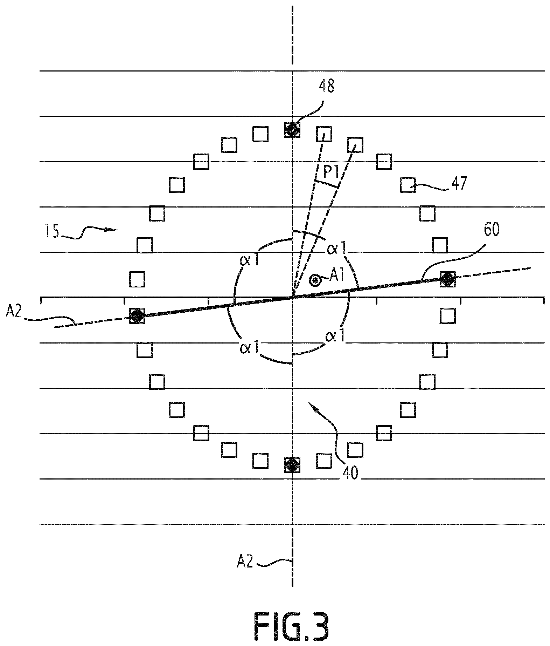

La figure 3 est une représentation schématique des positions respectives de chaque dent 47 du premier pignon plantaire 15, de chaque bras 60 et d'une dent 48 de chaque pignon satellite 20, vues dans une projection orthogonale selon le premier axe A1. Chaque dent 47 du premier pignon planétaire 15 a été représentée par un carré vide, les dents 48 des pignons satellites 20 ont été représentées par des carrés pleins. Seules les dents 48 des pignons satellites 20 en prise avec au moins une dent 47 du premier pignon planétaire 15 ont été représentées.

Comme visible sur la figure 3, bien que le deuxième nombre N2 ne soit pas un multiple entier du premier nombre N1, chaque premier angle α1 est égal au produit entre le quatrième nombre entier N4 et le premier pas angulaire P1.

Ainsi, les positions respectives de chaque dent 48 des pignons satellites 20 par rapport aux premières dents 47 du premier pignon planétaire 15 avec lesquelles elles sont en prise sont identiques pour chacun des pignons satellites 20 à chaque instant. Une telle configuration serait impossible si les premiers angles α1 étaient tous égaux les uns aux autres.

En conséquence, les efforts exercés par le premier pignon planétaire 15 sur chaque pignon satellite 20 sont identiques les uns aux autres à chaque instant.

Les efforts mécaniques sont donc mieux répartis entre les différents pignons satellites 20 que dans les réducteurs de l'état de la technique, en particulier lorsque les formes des dents 47, 48 ne sont pas bien contrôlées.

Le risque de rupture des dents 48 des pignons satellites 20 est alors réduit. Il en résulte que le réducteur 10 est plus fiable que les réducteurs de l'état de la technique.

De plus, chaque différence angulaire D1 étant inférieure ou égale au premier pas angulaire P1, les pignons satellites 25 sont répartis de façon relativement homogène dans l'espace autour des pignons planétaires 15, 25.

Le deuxième nombre N2 étant un nombre pair, la montabilité du réducteur 10 est assurée.

Selon un deuxième exemple de réalisation, le premier nombre N1 est égal à trois. Le réducteur 10 comporte alors trois pignons satellites 20. Les éléments identiques au premier exemple des figures 1 à 3 ne sont pas décrits à nouveau. Seules les différences sont mises en évidence.

Les reste R est égal à un.

Une troisième différence angulaire D3 est définie, pour chaque premier angle α1, comme étant la différence entre le premier angle α1 considéré et un deuxième angle mesurant 120 °.

Au moins une troisième différence angulaire D3 est égale, en valeur absolue, à deux tiers du premier pas angulaire P1.

Par exemple, deux premiers angles α1 sont égaux à 120° moins un tiers du premier pas angulaire P1 et un autre premier angle α1 est égal à 120° plus deux tiers du premier pas angulaire P1.

Chaque première différence angulaire D1 est donc égale à zéro ou au premier pas angulaire P1.

Les avantages du deuxième exemple sont identiques à ceux du premier exemple.

**Revendications**

1.  Réducteur épicycloïdal (10) comprenant un premier pignon planétaire (15) mobile en rotation autour d'un premier axe (A1) et un premier nombre (N1) de pignons satellites (20) engrenant sur le premier pignon planétaire (15), le premier pignon planétaire (15) comprenant un deuxième nombre (N2) de dents (47) réparties angulairement selon un premier pas angulaire (P1) autour du premier axe (A1), chaque pignon satellite (20) étant mobile autour d'un deuxième axe (A2) respectif, les deuxièmes axes (A2) et le premier axe (A1) étant concourants en un même point, deux deuxièmes axes (A2) consécutifs définissant entre eux un premier angle (α1),
    **caractérisé en ce qu'**une différence angulaire entre au moins un premier angle (α1) et un deuxième angle, égal au résultat de la division de 360 par le premier nombre entier (N1), est conforme à l'équation :

    $$|D2| = \frac{N4 * P1}{N1}$$

    dans laquelle D2 est la différence angulaire, N4 est un quatrième nombre entier différent de zéro et | | désigne la valeur absolue, et **en ce que** le deuxième nombre (N2) n'est pas un multiple entier du premier nombre (N1).

2.  Réducteur épicycloïdal (10) selon la revendication 1, comprenant un croisillon (40) comprenant un ensemble de paires de bras (60), chaque bras (60) portant un pignon satellite (20) respectif et s'étendant selon le deuxième axe (A2) du pignon satellite (20) correspondant, les deux pignons satellites (20) de chaque paire étant coaxiaux.

3.  Réducteur épicycloïdal (10) selon la revendication 1 ou 2, dans lequel le réducteur (10) comporte quatre pignons satellites (20).

4.  Réducteur épicycloïdal (10) selon la revendication 3, dans lequel le deuxième nombre (N2) est un nombre pair et au moins une deuxième différence angulaire entre l'un des premiers angles (α1) et un angle droit est égale, en valeur absolue, à la moitié du premier pas angulaire (P1).

5.  Réducteur épicycloïdal (10) selon l'une quelconque des revendications 1 à 4, dans lequel le deuxième nombre (N2) est un nombre pair et une différence angulaire (D1) entre deux premiers angles (α1) consécutifs est égale, en valeur absolue, au premier pas angulaire (P1).

6.  Réducteur épicycloïdal (10) selon la revendication 1, dans lequel le réducteur (10) comporte trois pignons satellites (20).

7.  Réducteur épicycloïdal (10) selon la revendication 6, dans lequel au moins une troisième différence angulaire entre un premier angle (α1) et un angle de cent vingt degrés est égale, en valeur absolue, à un tiers du premier pas angulaire (P1).

8.  Réducteur épicycloïdal (10) selon l'une quelconque des revendications 1 à 7, dans lequel chaque différence angulaire est inférieure ou égale au premier pas angulaire (P1).

9.  Bogie moteur de véhicule ferroviaire comprenant un réducteur épicycloïdal (10) selon l'une quelconque des revendications 1 à 8.

10. Véhicule ferroviaire comprenant un bogie moteur selon la revendication 9.

**Patentansprüche**

1.  Planetengetriebe (10), welches ein erstes Planetenzahnrad (15), das um eine erste Achse (A1) herum drehbar ist, und eine erste Anzahl (N1) von mit dem ersten Planetenzahnrad (15) eingreifenden Satellitenzahnräder (20) aufweist, wobei das erste Planetenzahnrad (15) eine zweite Anzahl (N2) von Zähnen (47) hat, welche um die erste Achse (A1) herum mit einem ersten Teilungswinkel (P1) winkelmäßig verteilt sind, wobei jedes Satellitenzahnrad (20) um eine jeweilige zweite Achse (A2) herum bewegbar ist, wobei die zweiten Achsen (A2) und die erste Achse (A1) in einem gleichen Punkt zusammentreffen, wobei zwei konsekutive zweite Achsen (A2) untereinander einen ersten Winkel (α1) definieren,

**dadurch gekennzeichnet, dass** eine Winkeldifferenz zwischen zumindest einem ersten Winkel ($\alpha$1) und einem zweiten Winkel, der beim Teilen von 360 durch die erste Anzahl (N1) als ein Ergebnis eine ganze Zahl ist, die Gleichung erfüllt:

$$\left| \text{D2} \right| = \frac{N4 * P1}{N1}$$

bei welcher D2 die Winkeldifferenz ist, N4 eine von null verschiedene ganzzahlige vierte Anzahl ist, | | den Betrag bezeichnet und dass die zweite Anzahl (N2) kein ganzzahliges Vielfaches der ersten Anzahl (N1) ist.

2. Planetengetriebe (10) gemäß Anspruch 1, ein Kreuzstück (40) aufweisend, das ein Ensemble von Armpaaren (60) aufweist, wobei jeder Arm (60) ein jeweiliges Satellitenzahnrad (20) trägt und sich entlang der zweiten Achse (A2) des korrespondierenden Satellitenzahnrads (20) erstreckt, wobei die zwei Satellitenzahnräder (20) eines jeden Paars koaxial sind.

3. Planetengetriebe (10) gemäß Anspruch 1 oder 2, bei welchem das Getriebe (10) vier Satellitenzahnräder (20) aufweist.

4. Planetengetriebe (10) gemäß Anspruch 3, bei welchem die zweite Anzahl (N2) eine gerade Anzahl ist und zumindest eine zweite Winkeldifferenz zwischen einem der ersten Winkel ($\alpha$1) und einem rechten Winkel im Betrag zur Hälfte des ersten Teilungswinkels (P1) gleich ist.

5. Planetengetriebe (10) gemäß irgendeinem der Ansprüche 1 bis 4, bei welchem die zweite Anzahl (N2) eine gerade Anzahl ist und eine Winkeldifferenz (D1) zwischen zwei konsekutiven ersten Winkeln ($\alpha$1) im Betrag zum ersten Teilungswinkel (P1) gleich ist.

6. Planetengetriebe (10) gemäß Anspruch 1, bei welchem das Getriebe (10) drei Satellitenzahnräder (20) aufweist.

7. Planetengetriebe (10) gemäß Anspruch 6, bei welchem zumindest eine dritte Winkeldifferenz zwischen einem ersten Winkel ($\alpha$1) und einem Winkel von einhundertzwanzig Grad im Betrag zu einem Drittel des ersten Teilungswinkels (P1) gleich ist.

8. Planetengetriebe (10) gemäß irgendeinem der Ansprüche 1 bis 7, bei welchem jede Winkeldifferenz kleiner oder gleich dem ersten Teilungswinkel (P1) ist.

9. Triebdrehgestell eines Schienenfahrzeugs, welches ein Planetengetriebe (10) gemäß irgendeinem der Ansprüche 1 bis 8 aufweist.

10. Schienenfahrzeug, welches ein Triebdrehgestell gemäß Anspruch 9 aufweist.

**Claims**

1. An epicyclic gear reducer (10) comprising a movable first planet pinion (15) that is movable in rotation about a first axis (A1) and a first number (N1) of satellite pinions (20) meshing with the first planet pinion (15), the first planet pinion (15) comprising a second number (N2) of teeth (47) distributed angularly according to a first angular pitch (P1) about the first axis (A1), each satellite pinion (20) being movable about a respective second axis (A2), the second axes (A2) and the first axis (A1) being concurrent at the same point, two consecutive second axes (A2) defining between them a first angle ($\alpha$1),
**characterised in that** an angular difference between at least one first angle ($\alpha$1) and a second angle, equal to the result obtained from the division of 360 by the first integer (N1), is in accordance with the equation:

$$\left| D2 \right| = \frac{N4 * P1}{N1}$$

wherein D2 is the angular difference, N4 is a fourth integer other than zero and | | denotes the absolute value, and **in that** the second number (N2) is not an integer multiple of the first number (N1).

2.  An epicyclic gear reducer (10) according to claim 1, that includes a cross-piece (40) comprising an assembled set of pairs of arms (60), each arm (60) carrying a respective satellite pinion (20) and extending along the second axis (A2) of the corresponding satellite pinion (20), the two satellite pinions (20) of each pair being coaxial.

3.  An epicyclic gear reducer (10) according to claim 1 or 2, in which the gear reducer (10) includes four satellite pinions (20).

4.  An epicyclic gear reducer (10) according to claim 3, in which the second number (N2) is an even number and at least one second angular difference between one of the first angles ($\alpha$1) and a right angle is equal, in absolute value, to half the first angular pitch (P1).

5.  An epicyclic gear reducer (10) according to any one of claims 1 to 4, in which the second number (N2) is an even number and an angular difference (D1) between two consecutive first angles ($\alpha$1) is equal, in absolute value, to the first angular pitch (P1).

6.  An epicyclic gear reducer (10) according to claim 1, in which the gear reducer (10) includes three satellite pinions (20).

7.  An epicyclic gear reducer (10) according to claim 6, in which at least one third angular difference between a first angle ($\alpha$1) and an angle measuring one hundred and twenty degrees is equal, in absolute value, to a third of the first angular pitch (P1).

8.  An epicyclic gear reducer (10) according to any one of claims 1 to 7, in which each angular difference is less than or equal to the first angular pitch (P1).

9.  A motor bogie of a railway vehicle comprising an epicyclic gear reducer (10) according to any one of claims 1 to 8.

10. A railway vehicle comprising a motor bogie according to claim 9.

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102011118481 A1